# EUROPEAN PATENT APPLICATION

(11) **EP 3 889 711 A1**
(43) Date of publication of application: **06.10.2021**
(21) Application number: 20167119.5
(22) Date of filing: 31.03.2020
(51) Int. Cl.: G05B 19/418, G06F 21/57

(54) **PORTABLE CYBERSECURITY RUN-TIME ENGINES**

(71) Applicant: Siemens Aktiengesellschaft, 80333 München (DE)
(72) Inventor: WEI, Dong, Edison, NJ 08820 (US); WANG, Lingyun, Princeton, NJ 08540 (US)
(74) Representative: Horn Kleimann Waitzhofer Patentanwälte PartG mbB

(57) **Abstract**

It is recognized herein that various security solutions, such as solutions described above that rely on segmentation, can be inadequate when applied to various current and future industrial automation architectures. Further, for example, current approaches to security in industrial automation settings often rely on configurations that are set during setup of a production cell, such that security is not changed during production or operation. Embodiments of the invention address and overcome one or more shortcomings by providing methods, systems, and apparatuses that enhance security capabilities in industrial automation systems. For example, security updates can be dispatched to devices that perform manufacturing or production operations without interrupting the operations. Further, individual field devices are aware of security parameters, such that individual field devices can mitigate and/or eliminate various security risks. Further still, cybersecurity can be centrally managed and enforced in a distributed manner.

## Description

### BACKGROUND

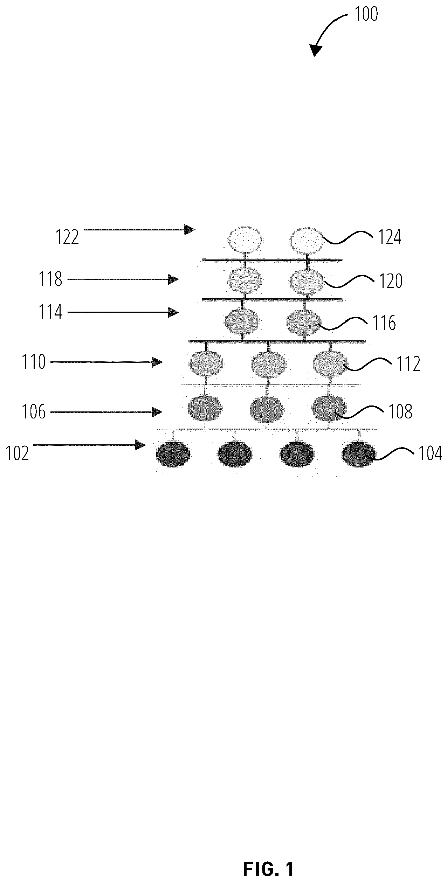

FIG. 1 includes an example representation of a current automation architecture 100 for manufacturing that is consistent with the Purdue Enterprise Reference Architecture. As shown, the architecture 100 defines a hierarchy that includes layers or levels, such that a bottom level 102 (or Level 0) can include field devices 104 such as sensors and actuators. A first level 106 directly above the bottom level 102 can include fieldbus devices or systems 108, such as programmable language controllers (PLCs), distributed control systems (DCSs), remote terminal units (RTUs), or the like. Devices at the level 106 often communicate via a fieldbus that provides safety and real-time features, such as control and monitoring. A second level 110 directly above the first level 106 can include nodes or devices 112 that communicate over an industrial Ethernet, and thus can also be referred to as industrial Ethernet nodes 112. Example nodes 112 at the level 110 can focus on connectivity, and can include supervisory control and data acquisition (SCADA) nodes and human machine interface (HMI) nodes. A third level 114 directly above the second level 110 can include various first Ethernet nodes 116, such as historian nodes or Manufacturing Execution System (MES) nodes. A fourth level 118 directly above the third level 114 can include various second Ethernet nodes 120, such as enterprise resource planning (ERP) nodes for example. A top or fifth level 122 directly above the fourth level 116 can include various Intranet nodes 124, such as order management nodes, archives, file servers, or accounting system nodes.

Still referring to FIG. 1, production planning data typically flows in a top-down fashion for instance from the Intranet nodes 124 at the top level 122 toward the bottom level 102. Conversely, data acquisition typically flows in a bottom-up fashion, for instance from the field devices 104 at the bottom level 102 toward the top level 122. In many cases, there is communication connections between devices at the same level or between devices at levels that are directly adjacent to next to each other, but no direct communication connection between devices at different levels that are not directly adjacent to each other. Thus, current industrial architectures such as the example automation architecture 100, are often segmented by cells or layers. Security solutions for such architectures, for instance security solutions for plant floor automation and control systems, can be based on the segmentation features of the architecture. For example, an example industrial network can include a plant floor or production network that includes production that are isolated from each other. Each production cell can define a production cell network that is isolated from the other production cell networks. Because of the isolation and segmentation, the production cell networks can each be protected by a security device, such as a firewall or virtual private network (VPN) concentrator, that is disposed at the highest level of the respective production cell network. Such a security device can be adequate if cyberattacks come from outside the plant floor network, for instance from a communication link between the production cell network and an office network that is above the production cell network in the architecture. In such configurations, various controllers or nodes within production cells can be unaware of cyberattacks because a security device might be solely responsible for mitigating any cyberattack on its respective production cell network.

It is recognized herein that various security solutions, such as solutions described above that rely on segmentation, can be inadequate when applied to various current and future industrial automation architectures. Further, for example, current approaches to security in industrial automation settings often rely on configurations that are set during setup of a production cell, such that security settings are not changed during production or operation.

### BRIEF SUMMARY

Embodiments of the invention address and overcome one or more of the described-herein shortcomings by providing methods, systems, and apparatuses that enhance security capabilities in industrial automation systems. For example, security updates can be dispatched to devices that perform manufacturing or production operations without interrupting the operations. Further, individual field devices are aware of security parameters, such that individual field devices can mitigate and/or eliminate various security risks.

In an example aspect, an industrial automation system includes a plant floor network configured to perform manufacturing operations. The plant floor network can include a security management proxy and a plurality of devices in communication with the security management proxy. Data that is associated with the plurality of devices can be collected, for instance by the security management proxy. As an example, data may be collected by obtaining a current security policy from each of the plurality of devices. Security requirements associated with the plurality of devices can be determined, for instance by the security management proxy. In some cases, the security management proxy can obtain at least a portion of the security requirements from a security management server that can be included in an office network coupled to the plant floor network. A comparison of the security requirements and the data can be made, for instance by the security management proxy. Based on the comparison, the security management proxy can determine that one or more of the plurality of devices have at least one security vulnerability, such that the one or more of the plurality of devices define one or more vulnerable devices. Thereafter, the security management proxy can dispatch a respective security update to each of the one or more vulnerable devices.

In another aspect, security updates are applied to the one or more vulnerable devices so as to remove the at least one security vulnerability from the one or more vulnerable devices. For example, each of the one or more devices can define a respective cybersecurity run-time engine that can implement the security updates on the one or more vulnerable devices while the plant floor network is performing the manufacturing operations, such that operation of the industrial automation system is uninterrupted by the security updates. To implement the security updates, in some cases, the security management proxy can download, to respective cybersecurity runtime engine of each of the one or more vulnerable devices, a new security policy, a new security standard, or a new security patch. By way of an example in which a new security policy is downloaded, a first cybersecurity runtime engine of a first device of the one or more vulnerable devices can receive an access request from a second cybersecurity run-time engine of a second device of the plurality of devices. Based on the access request, the first cybersecurity runtime engine can determine a role associated with the second device. The role can be compared to the access control policy to determine whether an access is permitted for the second device. Thus, the first cybersecurity run-time engine can deny or grant the access request responsive to determining whether the access is permitted for the second device, so as to enforce the new security policy.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 illustrates an example automation architecture that is segmented into levels.
FIG. 2 illustrates an example automation architecture that is meshed, according to an example embodiment.
FIG. 3 is a block diagram of an example industrial automation system that includes lightweight cybersecurity (Cyber-RT) engines in accordance with an example embodiment.
FIG. 4 is a block diagram of another example industrial automation system that includes a security management server and a security management proxy in accordance with an example embodiment.
FIG. 5 illustrates a computing environment within which embodiments of the disclosure may be implemented.
FIG. 6 is a flow diagram that depicts an example operation of an industrial automation system, for instance a security management proxy within the industrial automation system, in accordance with an example embodiment.

### DETAILED DESCRIPTION

Embodiments of the invention address and overcome one or more of the described-herein shortcomings or technical products by providing methods, systems, and apparatuses for providing security in industrial automation systems. It is recognized herein that current approaches to security in industrial automation systems often rely on the segmentation and/or static configuration of such systems.

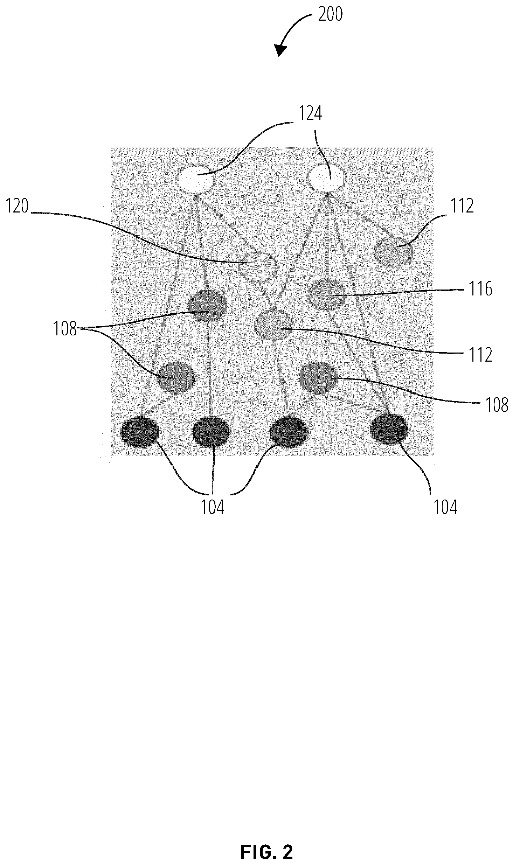

Referring to FIG. 2, however, an example automation system 200 defines a meshed automation architecture. In particular, the system 200 includes the field devices 104, for instance sensor and actuator nodes, that have a direct communication link with other nodes in the system 200 regardless of whether the other nodes are in levels that are directly adjacent to the bottom level 102 of the field devices 104. That is, in the system 200, the field devices 104 can be configured to communicate directly with: each other; fieldbus devices 108 (e.g., programable logic controllers (PLCs), distributed control systems (DCSs), remote terminal units (RTUs)); industrial Ethernet nodes 112 (SCADA nodes, HMI nodes); Ethernet nodes 116 and 120 (e.g., historian nodes, MES nodes, ERP nodes); and/or Intranet nodes 124 (e.g., order management nodes, archives, file servers, accounting nodes). Similarly, in the example automation system 200, any of the fieldbus devices 108, industrial Ethernet nodes 112, Ethernet nodes 116, Ethernet nodes 120, and Intranet nodes 124 can be configured to communicate with one another. Direct communication can be defined by devices that are physically connected to one another, or by components that are logically connected to one another. By way of example, the Intranet nodes 124 may include an asset management server that can collect data directly from motors at the bottom level 102. By way of further example, various functions, such as functions performed by the Intranet nodes 124 or the Ethernet nodes 116 and 120, can be decoupled from hardware such that the functions can be hosted anywhere on a local device or remotely in a private or public computing cloud. Thus, it is recognized herein that, in some cases, industrial automation architectures are meshed such that devices and systems, for instance information technology (IT) and operational technology (OT) systems, are no longer segmented into layers, thereby creating security challenges. Further, systems that remain segmented may require their own engineering tools, which can create technical difficulties for centrally managing security policies.

Embodiments described herein can provide security solutions to various architectures that are not segmented, such as meshed architectures, for instance the architecture of the example automation system 200.

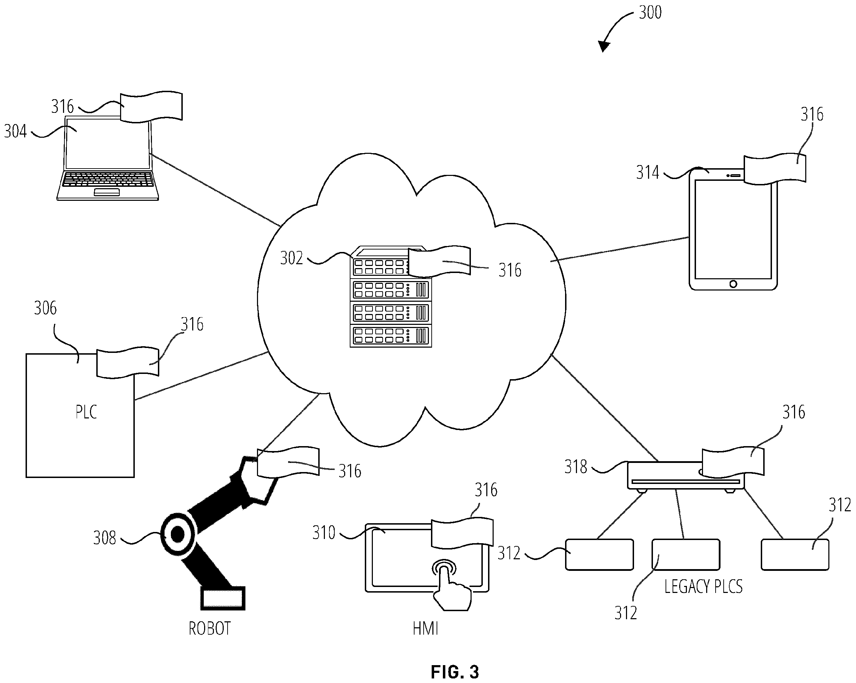

Referring now to FIG 3, an example industrial automation or industrial control system (ICS) 300 includes a cloud server 302 and various devices or systems that can communicate with the cloud server 302. Example devices that can access the cloud server 302 include, without limitation, a web browser 304, a programmable logic controller (PLC) 306, a third party robot 308, a human machine interface (HMI) 310, one or more legacy PLCs 312, and a mobile device 314. It will be understood that the industrial automation system 300 is simplified for purposes of example. That is, the industrial automation system 300 may include additional or alternative nodes or systems, for instance other network devices, that define alternative configurations, and all such configurations are contemplated as being within the scope of this disclosure.

Still referring to FIG. 3, the industrial automation system 300 can include a plurality of lightweight cybersecurity run-time (Cyber-RT) engines 316. The Cyber-RT engine 316 can define software that includes routines and functions that can be added to an application on industrial devices, so as to provide the industrial devices with new or enhanced security capabilities. The Cyber-RT 316 engine can include platform-independent software that can run on PLCs, HMIs, PCs, servers, embedded systems (e.g., robotics), or the like. In some cases, the Cyber-RT engine 316 runs on devices via an application programming interface (API). The Cyber-RT engine 316 can include a web interface that provides access to users, for instance security professionals. For example, using the web interface, security professionals can manage security policies and monitor security events. Consequently, in some examples, the Cyber-RT engine has the same look and feel for security professionals regardless of the platform it runs on. As described herein in accordance with various embodiments, the Cyber-RT engine 316 can manage and orchestrate various cybersecurity-related functions. For example, the Cyber-RT engine 316 can manage security logs and security policies of the industrial automation system 300. In some examples, the Cyber-RT engine 316 is portable and can be deployed on any embedded devices (e.g., NanoBox and MicroBox), controllers (e.g., S7-1500 MFP), enterprise-level servers (e.g., SCADA), or mobile devices (e.g., Android). For example, in the industrial automation system 300, the Cyber-RT engine 316 can be deployed on the cloud server 302, web browser 304, PLC 306, robot 308, HMI 310, legacy PLCs 312, and/or mobile device 314.

Implementations of the Cyber-RT engine 316 can depend on the node associated with the Cyber-RT engine 316. In some cases, the Cyber-RT engine 316 can run on a virtual machine within the industrial automation system 300, so as to provide security services for a target device, for instance the robot 308 or PLC 306. The virtual machine (e.g., Windows or Linux) can possess the computational power and memory space to support the functionality of the Cyber-RT engine 316 that is described herein. By way of example, and without limitation, the virtual machine can be located on the cloud, for instance on the cloud server 302. The cloud server 302 can include or be implemented by various computing devices, such as an S7 Open Controller or an Industrial PC for example.

In some cases the, the Cyber-RT engine 316 runs on a network device, for instance a network device 318, which can connect to, and protect, legacy control systems, for instance the legacy PLCs 312, which might not have enough computational power or memory space to perform security functionalities. Example network devices on which the Cyber-RT engine 316 can run include, without limitation, the Siemens RuggedCom VPE1400 or the RuggedCom RX1501 APE module. Additionally, or alternatively, the Cyber-RT engine 316 can be added to devices or servers of the industrial automation system 300. For example, the Cyber-RT engine 316 can be integrated on the mobile device 314. By way of example, the mobile device 314 can collect data from a plant floor of the industrial automation system 300. By way of further example, the mobile device 314 can be used to troubleshoot other devices (PLCs, DCS, drives, log servers) on the plant floor within the industrial automation system 300. In some examples, the Cyber-RT engine 316 runs on a third party device, for instance a 3D printer or the robot 308, which possesses enough computational power and memory to support a virtual machine such as the Cyber-RT engine 316. As described above, the Cyber-RT engine 316 can also be integrated on the cloud server 302, such that the cloud server 302 can connect to devices within the industrial automation system 300, for instance devices on the plant floor of the industrial automation system 300, in a secure fashion.

In some embodiments, each Cyber-RT engine 316 includes a web portal for managing the respective Cyber-RT engine 316. For example, a user can use the web browser 304 to configure the Cyber-RT engine 316 on the PLC 306, robot 308, HMI 310, mobile device 314, or network device 318. Such configurations can include updating or upgrading a given Cyber-RT engine 316. For example, security policies can be configured, such as access control lists, TLS versions, cipher algorithms, or the like. The Cyber-RT engine 316 can be updated as desired, for example to add new ciphered algorithms, add new intrusion detection signatures, remove an obsolete secure sockets layer (SSL), remove obsolete algorithms, or the like. In some examples, the web portal is used to configure how the Cyber-RT engine 316 accesses an industrial cyber security cloud service, for instance a cloud service provided by the cloud server 302. Thus, using the web portal, a particular Cyber-RT engine 316 can be updated or upgraded periodically or based on an event, such as the release of an updated version of security software or functionality.

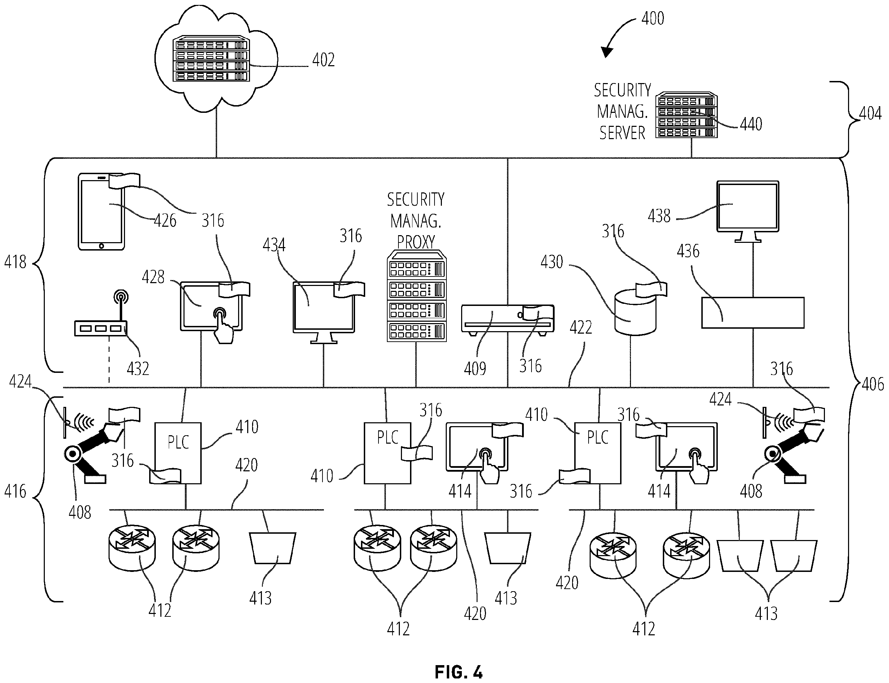

With continuing reference to FIG. 3, devices having the Cyber-RT engine 316 can securely exchange data with each other logically via their respective Cyber-RT engines. The Cyber-RT engine 316 can secure communication links, for example and without limitation, by performing authentication and authorization, access control, ciphers and intrusion detection, and by reporting or logging security-related events so that corresponding alarms are triggered. In an example, the devices having the Cyber-RT engine 316 also provide a web portal so that, for example, security professionals can access the Cyber-RT engine 316 via the web browser 304. The web portal can be the same or similar regardless of the specific Cyber-RT engine 316 that is accessed via the web portal, such that access to different Cyber-RT engines is consistent. The web portal of a given Cyber-RT engine 316 can be used to manage, configure, monitor, and troubleshoot the Cyber-RT engine 316. In some cases, the Cyber-RT engine 316 connects to the cloud server 302 when managing licenses, upgrades, or downloading new security features. In such cases, a Cyber-RT engine 316 might not be connected to the cloud server 302 during production operations of the industrial automation system 300. In an example, the Cyber-RT engine 316 runs as an application-layer security proxy. Each Cyber-RT engine 316 can be identified by a unique identification number, license number, and/or private key and digital certificate. In an example, the digital certificate is signed by a cloud-based security server, such as a security server 402 (see FIG. 4).

Referring also to FIG. 4, in some examples, the Cyber-RT engine 316 can be managed by the security server 402. In particular, the Cyber-RT engines 316 can be deployed to a given device from the security server 402. As described above, users can configure a particular Cyber-RT engine 316, before or after deployment, via the web browser 304. For example, users can customize an access control list and/or a role-based control list. A license of the Cyber-RT engine 316 can be managed (e.g., buy, sell, revoke, renew, upgrade) by a security service provided by the security server 402 (e.g., Siemens' Mindsphere) via the web browser 304. In some cases, Cyber-RT engines can be updated or upgraded, for instance so as to add new security features, by accessing services on the security server 402. Similarly, obsolete features, such as obsolete cryptographic algorithms for example, can be removed by accessing the security server 402. Thus, the security server 402 can provide a centralized place for security policy management for an organization or plant. For example, a security policy can be created in the security server 402, and the security server 402 can load policies to Cyber-RT engines within an organization or plant, for instance to Cyber-RT engines in an OT and IT environment. In some cases, events associated with security are sent to the security server 402 so that the event is reported and logged. Further, alarms related to the events can be invoked. In some examples, the security server 402, for instance a service hosted by the security server 402, can perform forensic analysis on any security-related events or incidents. Additionally, or alternatively, the security server 402, for instance a service hosted by the security server 402, can provide various new security features such as, for example and without limitation, new cryptographic algorithms, new signatures for intrusion detection (e.g., production process knowledge-based or side channel-based intrusion detection), and templates for security standards.

Referring in particular to FIG. 4, an example industrial automation or industrial control system (ICS) 400 includes an office IT network 404 and a production or plant floor network 406 communicatively coupled to the office IT network 404. The industrial automation system 400 further includes the security server 402 that can be located on the cloud or otherwise configured so as to be accessible to the office IT network 404 and the plant floor network 406. The plant floor network 406 can include a production cell gateway 409 that is connected to the IT network 404. The plant floor network 406 can include various production machines configured to work together to perform one or more manufacturing operations. Example production machines of the plant floor network 406 can include, without limitation, robots 408 and field devices, such as sensors, actuators, or machines, which can be controlled by a respective PLC 410. The PLC 410 can send instructions to respective field devices via input/output (I/O) modules 412. Each PLC 410 can also control one or more drives 413. Each PLC 410 can be coupled to zero or more human machine interfaces 414. It will be understood that the industrial automation system 400 is simplified for purposes of example. That is, the industrial automation system 400 may include additional or alternative nodes or systems, for instance other network devices, that define alternative configurations, and all such configurations are contemplated as being within the scope of this disclosure.

The industrial automation system 400, in particular the plant floor network 406, can define a fieldbus portion 416 and an Ethernet portion 418. For example, the fieldbus portion 416 can include the robots 408, PLC 410, I/O modules 412, drives 413, and a given HMI 414. The fieldbus portion 416 can define one or more production cells. The PLC 410, I/O modules 412, drives 413, and HMI 414 within a given production cell can communicate with each other via a respective field bus 420. Each production cell can be defined by a respective PLC 410, such that the PLC 410, and thus the corresponding production cell, can connect to the Ethernet portion 418 via an Ethernet connection 422. The robots 408 can be configured to communicate with other devices within the fieldbus portion 416 via a WiFi connection 424. Similarly, the robots 408 can communicate with the Ethernet portion 418 via the WiFi connection 424. The Ethernet portion 418 of the plant floor network 406 can include various computing devices communicatively coupled together via the Ethernet connection 422. Example computing devices in the Ethernet portion 418 include, without limitation, a mobile data collector 426, an HMI 428, the production cell gateway 409, a log server 430, a wireless router 432, a manufacturing execution system (MES) 434, a router 436, and an engineering system (ES) 438. In an example, the MES 434, HMI 428, and log server 430 are connected to the plant floor or plant floor network 406 directly. The router 436 and the wireless router 432 can also connect to the plant floor network 406 directly. Thus, in some cases, mobile users, for instance the mobile data collector 426 and robots 408, can connect to the plant floor network 406 via the wireless router 432. In an example, the ES 438 connects to the plant floor network 406 via the router 436. The production cell gateway 409 can be located between the IT network 404 and the plant floor network 406 so as to separate the plant floor network 406 from the IT network 404. In some cases, by way of example, the ES 438 and the mobile data collector 426 are guest devices that are allowed to connect to the production cell gateway 409. In an example, the ES 438 is permitted for on-site trouble shooting and the mobile data collector 426 is permitted for on-site data collection. It will be understood that guest devices to the plant floor network 406 can vary as desired.

With continuing reference to FIG. 4, in accordance with various example embodiments, the IT network 404 can include a security management node or server 440, and the plant floor network 406 can include a security management proxy 442. The plant floor network can also include various Cyber-RT engines 316 as desired. For example, the Cyber-RT engine 316 can be loaded on the robots 408, HMIs 414 and 428, PLCs 410, production cell gateway 409, MES 434, mobile data collector 426, and/or the like. In some examples, the security management proxy 442 can run as an application or be implemented as a service on a stand-alone PC or server that is connected to the plant floor network 406. Alternatively, or additionally, the security management proxy 442 can run as an application or service on the MES 434. Similarly, the security management server 440 can run as an application or service on a stand-alone server or can be integrated with existing servers. In some cases, the security management server 440 can be distributed across multiple devices. The security management proxy 442 and the security management server 440 can have a secure communication connection with each other. The security management proxy 442 can possess or obtain any information related to any device in the plant floor network 406, such as a given device's product type, firmware version, operating system, or the like.

The security management proxy 442 can also have a secure connection with each Cyber-RT engine 316 on each device, which can enforce security policies. In some examples, the security management proxy 442 can obtain various updates to security standards or security policies, for instance company-wide security policies, from the security server 402. Alternatively, or additionally, the security management proxy 442 can generate security policies that correspond to respective devices. In some cases, the security management proxy 442 can generate access control policies, for instance role-based access control policies, at the application layer for perimeter devices (e.g., production cell gateway 409, wireless router 432) of the plant floor network 406. The security management proxy 442 can download security policies or standards to the corresponding devices, such that the Cyber-RT engine 316 can enforce the policy or standard associated with the respective device. By way of example, a given security policy may control role-based access to various devices within the plant floor network 406. As an example of role-based access, in an example configuration a first user, for instance an automation engineer, can access a given PLC 410 to read/write/update applications; and a second user, for instance a maintenance engineer, can access the devices on the plant floor network 406 via the WiFi connection 424. Continuing with the example, the second user, based on their role, is only permitted to read information or data from the various devices, for example the PLC 410, HMIs 414 and 428, MES 434, and/or log server 430. It will be understood that a security policy obtained or generated by the security management proxy 442 can limit access, based on roles or otherwise, as desired.

In some examples, the security management proxy 442 receives security requirements from the MES 434. By way of example, a particular production cell of the plant floor network 406 may produce products that require that operations are performed in accordance with security level three (SL3) defined in IEC 62443. The security management proxy 442 can receive such a requirement from the MES 434. By way of another example, a particular production cell of the plant floor network 406 may produce a pharmaceutical product that has to be manufactured in accordance with a particular FDA standard. Such a requirement and/or standard can be obtained by the security management proxy 442 and sent to corresponding devices, such that the Cyber-RT engine 316 can enforce the policy or standard associated with the respective device. In some cases, the security management proxy 442 can send requests to the security management server 440 for information associated with devices in the plant floor network 406. For example, the security management proxy 442 can request information, from the security management server 440, related to active security policies on each device. Alternatively, or additionally, the security management proxy 442 can collect information or data from devices within the plant floor network 406, via the Cyber-RT engine 316 of each device. The security management proxy 442 can obtain such information or data, and send it to the security server 402. The information or data can be sent to the security server 402 for information sharing purposes, forensic analysis, machine learning, or the like. Alternatively, or additionally, the security management proxy 442 can collect information or data from the Cyber-RT engine 316 of a given device responsive to a request for the information or data. The security management server 440 can send such a request to the security management proxy 442, and the security management server 440 can receive the information that it requested from the security management proxy 442. The security management proxy 442 can define a web interface for users to perform various operations, for instance for users to monitor security-related data within the plant floor network 406.

Still referring to FIG. 4, the security management server 440 can reside within the IT network 404, and can have a secure communication connection with the security server 402 and one or more security management proxies, for instance the security management proxy 442. In some cases, the security management server 440 has a secure connection with multiple security management proxies on different plant floor or plant floor networks. The security management server 440 can define an interface for users, for instance security professionals. For example, security professionals can use the interface to manage global or company-wide security policies or firmware versions. The interface can define a web interface that allows a user to view firmware versions or security policies that are enforced on each device within one or more plant floor networks. In an example, when a security policy changes or is updated, the security management server 440 identifies any security management proxies having devices affected by the change or update. Based on identifying the affected devices, the security management server 440 can send a notification to the appropriate security management proxies, for instance the security management proxy 442, so that the corresponding devices can be updated via the Cyber-RT engine 316. In some examples, the security management server 440 subscribes to a security service hosted on the cloud, for instance the security server 402. Based on the subscription, the security management server 440 can receive information from the security server 402, for instance when security standards are updated. By way of example, the security management server 440 can receive information related to newly released vulnerabilities and fixes (e.g., obsolete algorithms, operating system vulnerability, communication protocol vulnerability, etc.) that may affect devices connected to the plant floor networks. As described above, the security management server 440 can send notifications related to the subscription to the appropriate security management proxies. For example, the security management server 440 can send notifications to the security management proxies when the security management server 440 receives newly released vulnerabilities and fixes.

The security server 402 can be implemented as a service or application on one or more servers, for instance on a server in the cloud. The security server 402 can have a secure connection with one or more security management servers, for instance the security management server 440. The security server 402 can provide various information to the security management servers to which it is connected. Example information may indicate or include, without limitation, security standards and updates to security standards, hardware vulnerabilities and related fixes to hardware, operating system vulnerabilities and related fixes to the operating system, algorithm vulnerabilities and related fixes to the algorithm (e.g., replace SSL 3.0 with TLS 1.2), application vulnerabilities and related fixes to the application, and the like. Various security management servers, for instance the security management server 440, can subscribe to the security server 402. Based on a subscription, the security server 402 can send various information to security management servers that are subscribers to the security server 402 or to a service offered by the security server 402. By way of example, the cloud server 402 can send information and data related to hardware versions, software versions, operating systems, security standard versions, and the like. Thus, the security management server 440 can define a single node from which entities (e.g., nodes within the industrial automation system 400) can receive various security vulnerability management services.

In an example, the security management server 440 can send security information, which it can receive based on its subscription, to appropriate devices, in particular the Cyber-RT engine 316 associated with the devices, within the industrial automation system 400. Alternatively, or additionally, the Cyber-RT engines can be configured with security information, for instance via a web portal accessible to a user. Thus, devices within the plant floor network 406, in particular Cyber-RT engines within the plant floor network, are aware of various data and information that can enhance security. By way of example, and without limitation, a given device can be aware of its operating system and related characteristics, such as the operating system build, vulnerabilities, or patches. A given device, in particular the Cyber-RT engine 316, can be aware of which protocols, for instance SSL/TLS protocols (e.g., SSL 2.0, SSL 3.0, TLS 1.1, TLS 1.3), that it supports. A given device may support one or more protocols that are obsolete, for example, so as to interoperate with various legacy systems that are not updated. Additionally, or alternatively, a given device, in particular the Cyber-RT engine 316, can be aware of: its key exchange methods (e.g., RSA, DS-RSA, PSK); its cipher mechanisms (e.g., block, stream, AES, DES, 3DES); types of intrusion that it can detect (e.g., illegitimate access, port scan, DoS attack); types of cyberattacks that it can mitigate (e.g., illegitimate access, man-in-the-middle); security standards to which the device conforms (e.g., IEC 62443 Security Level 2, FDA cybersecurity recommendations for drug and food manufacturing and/or medical device manufacturing); and/or its certificate and who signed the certificate. A given Cyber-RT engine 316 may also open and close communication channels or ports to its device. In response to a security incident, a given Cyber-RT engine 316 can determine which mitigation mechanism it can use. The Cyber-RT engine 316 can also determine how to log the security incident, report the security incident, and/or activate an alarm associated with the security incident.

Similarly, as described above, security policies can be sent to or otherwise configured on a given Cyber-RT engine 316. Based on security policies, a given device, in particular the Cyber-RT engine 316, can be aware of: which ports or services (e.g., http, https, telnet, ftp) are activated; which key exchange methods are activated; which cipher methods are activated; an access control list having devices identified by IP address; role-based access control policies; which types of intrusion detection mechanisms and/or signatures are used; which industrial security standards are met; or the like. Further, the Cyber-RT engine 316 associated with a given device can be aware of various security-related statuses, for example while the device is operating. For example, during data exchange with another device, a given device can identify which device, in particular the role of the device, is exchanging data. The device can also identify which ports and services are being used. During operation, a given device can also determine bandwidth usage or round-trip time for a particular communication session. By way of further example, devices within the industrial automation system 400 can identify which security policies are activated; which types of intrusion are detected within the system 400; and/or which security incident logs, reports, or alarms are triggered.

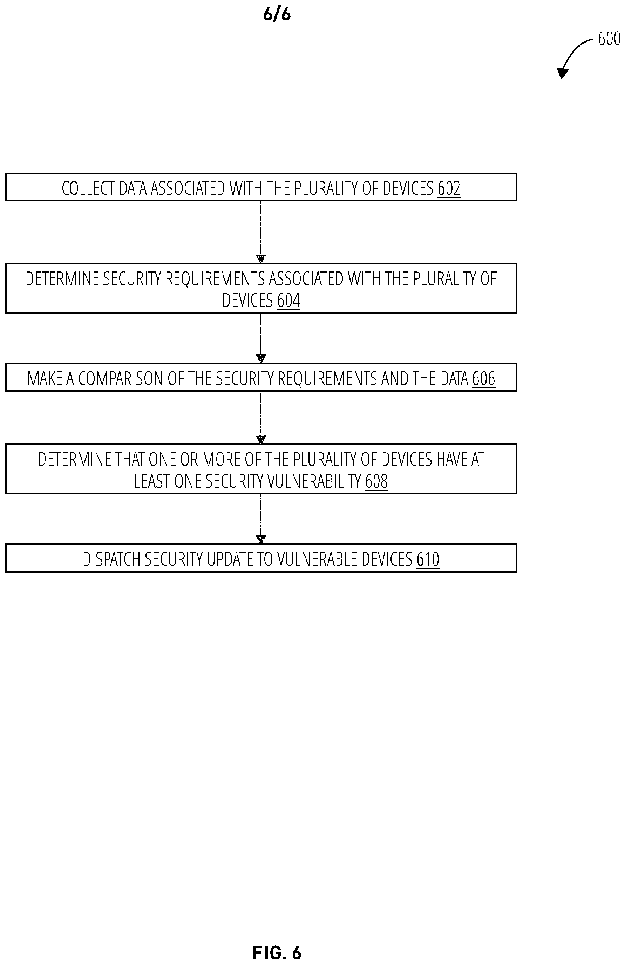

Referring now to FIG. 6, an example routine 600 can be performed in an industrial automation system, for instance the industrial automation system 400, that includes a plant floor network configured to perform manufacturing operations. The plant floor network can include a security management proxy, for instance the security management proxy 442, and a plurality of devices in communication with the security management proxy. At 602, data that is associated with the plurality of devices is collected, for example, by the security management proxy. As an example, data may be collected by obtaining a current security policy from each of the plurality of devices. At 604, security requirements associated with the plurality of devices can be determined, for example, by the security management proxy. In some cases, the security management proxy can obtain at least a portion of the security requirements from a security management server, for instance the security management server 440 that can be included in an office network coupled to the plant floor network. At 606, a comparison of the security requirements and the data can be made by the security management proxy. At 608, based on the comparison, the security management proxy can determine that one or more of the plurality of devices have at least one security vulnerability, such that the one or more of the plurality of devices define one or more vulnerable devices. Thereafter, at 610, the security management proxy can dispatch a respective security update to each of the one or more vulnerable devices.

In some cases, the security updates are applied to the one or more vulnerable devices so as to remove the at least one security vulnerability from the one or more vulnerable devices. For example, each of the one or more devices can define a respective cybersecurity run-time engine that can implement the security updates on the one or more vulnerable devices while the plant floor network is performing the manufacturing operations, such that operation of the industrial automation system is uninterrupted by the security updates. To implement the security updates, in some cases, the security management proxy can download, to respective cybersecurity runtime engine of each of the one or more vulnerable devices, a new security policy, a new security standard, or a new security patch. By way of an example in which a new security policy is downloaded, a first cybersecurity runtime (Cyber-RT) engine of a first device of the one or more vulnerable devices can receive an access request from a second Cyber-RT engine of a second device of the plurality of devices. Based on the access request, the first Cyber-RT engine can determine a role associated with the second device. The role can be compared to the access control policy to determine whether an access is permitted for the second device. Thus, the first Cyber-RT engine can deny or grant the access request responsive to determining whether the access is permitted for the second device, so as to enforce the new security policy.

By way of another example in which a new security standard that defines a new communication protocol is downloaded, a first Cyber-RT engine of a first device of the one or more vulnerable devices can initiate a communication session with a second Cyber-RT engine of a second device of the plurality of devices. During the communication session, the first Cyber-RT engine can negotiate with the second Cyber-RT engine to select the new communication protocol. Thus, the first Cyber-RT engine can send data to the second Cyber-RT engine using the new communication protocol, so as to enforce the new security standard.

As described herein, the security management server and/or the security management proxy can subscribe to a security service, for instance a cloud-hosted service from the security server 402, so as to define a subscription. Based on the subscription, the security management server and/or the security management proxy can receive a notification from the security service. Alternatively, or additionally, the security management proxy can receive the notification from the security management server. In some examples, the notification can define a vulnerability and a fix to the vulnerability. In response, the security management proxy can identify a set of devices of the plurality of devices having the vulnerability. Additionally, the security management proxy can send the fix to each of the devices in the set of devices having the vulnerability.

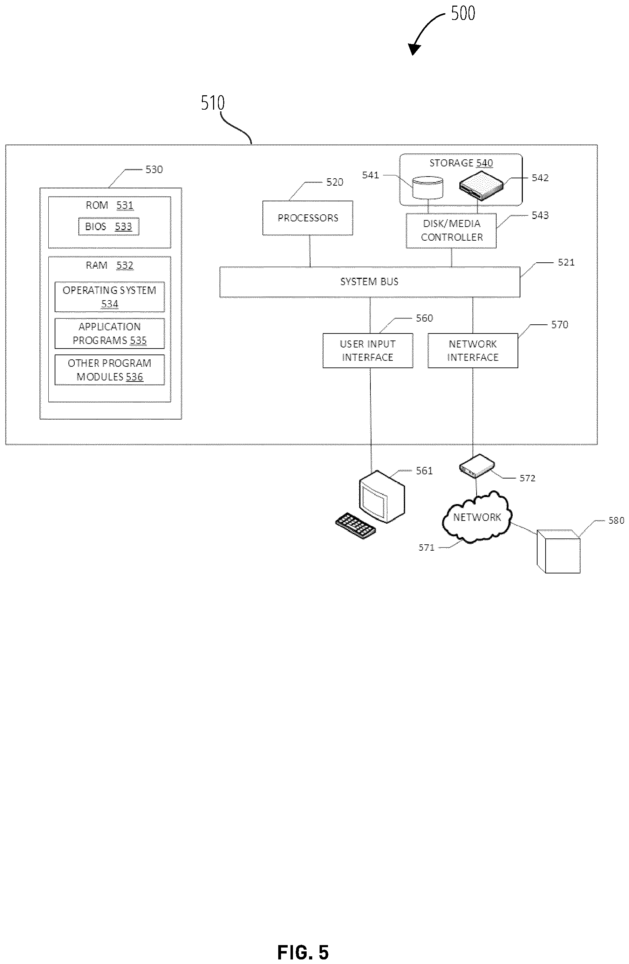

FIG. 5 illustrates an example of a computing environment within which embodiments of the present disclosure may be implemented. A computing environment 500 includes a computer system 510 that may include a communication mechanism such as a system bus 521 or other communication mechanism for communicating information within the computer system 510. The computer system 510 further includes one or more processors 520 coupled with the system bus 521 for processing the information. The robot device 104 may include, or be coupled to, the one or more processors 520.

The processors 520 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 520 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 521 may include at least one of a system bus, a memory bus, an address bus, or a message bus, and may permit exchange of information (e.g., data (including computer-executable code), signaling, etc.) between various components of the computer system 510. The system bus 521 may include, without limitation, a memory bus or a memory controller, a peripheral bus, an accelerated graphics port, and so forth. The system bus 521 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 5, the computer system 510 may also include a system memory 530 coupled to the system bus 521 for storing information and instructions to be executed by processors 520. The system memory 530 may include computer readable storage media in the form of volatile and/or nonvolatile memory, such as read only memory (ROM) 531 and/or random access memory (RAM) 532. The RAM 532 may include other dynamic storage device(s) (e.g., dynamic RAM, static RAM, and synchronous DRAM). The ROM 531 may include other static storage device(s) (e.g., programmable ROM, erasable PROM, and electrically erasable PROM). In addition, the system memory 530 may be used for storing temporary variables or other intermediate information during the execution of instructions by the processors 520. A basic input/output system 533 (BIOS) containing the basic routines that help to transfer information between elements within computer system 510, such as during start-up, may be stored in the ROM 531. RAM 532 may contain data and/or program modules that are immediately accessible to and/or presently being operated on by the processors 520. System memory 530 may additionally include, for example, operating system 534, application programs 535, and other program modules 536. Application programs 535 may also include a user portal for development of the application program, allowing input parameters to be entered and modified as necessary.

The operating system 534 may be loaded into the memory 530 and may provide an interface between other application software executing on the computer system 510 and hardware resources of the computer system 510. More specifically, the operating system 534 may include a set of computer-executable instructions for managing hardware resources of the computer system 510 and for providing common services to other application programs (e.g., managing memory allocation among various application programs). In certain example embodiments, the operating system 534 may control execution of one or more of the program modules depicted as being stored in the data storage 540. The operating system 534 may include any operating system now known or which may be developed in the future including, but not limited to, any server operating system, any mainframe operating system, or any other proprietary or non-proprietary operating system.

The computer system 510 may also include a disk/media controller 543 coupled to the system bus 521 to control one or more storage devices for storing information and instructions, such as a magnetic hard disk 541 and/or a removable media drive 542 (e.g., floppy disk drive, compact disc drive, tape drive, flash drive, and/or solid state drive). Storage devices 540 may be added to the computer system 510 using an appropriate device interface (e.g., a small computer system interface (SCSI), integrated device electronics (IDE), Universal Serial Bus (USB), or FireWire). Storage devices 541, 542 may be external to the computer system 510.

The computer system 510 may also include a field device interface 565 coupled to the system bus 521 to control a field device 566, such as a device used in a production line. The computer system 510 may include a user input interface or GUI 561, which may comprise one or more input devices, such as a keyboard, touchscreen, tablet and/or a pointing device, for interacting with a computer user and providing information to the processors 520.

The computer system 510 may perform a portion or all of the processing steps of embodiments of the invention in response to the processors 520 executing one or more sequences of one or more instructions contained in a memory, such as the system memory 530. Such instructions may be read into the system memory 530 from another computer readable medium of storage 540, such as the magnetic hard disk 541 or the removable media drive 542. The magnetic hard disk 541 and/or removable media drive 542 may contain one or more data stores and data files used by embodiments of the present disclosure. The data store 540 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 520 may also be employed in a multi-processing arrangement to execute the one or more sequences of instructions contained in system memory 530. In alternative embodiments, hard-wired circuitry may be used in place of or in combination with software instructions. Thus, embodiments are not limited to any specific combination of hardware circuitry and software.

As stated above, the computer system 510 may include at least one computer readable medium or memory for holding instructions programmed according to embodiments of the invention and for containing data structures, tables, records, or other data described herein. The term "computer readable medium" as used herein refers to any medium that participates in providing instructions to the processors 520 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 541 or removable media drive 542. Non-limiting examples of volatile media include dynamic memory, such as system memory 530. Non-limiting examples of transmission media include coaxial cables, copper wire, and fiber optics, including the wires that make up the system bus 521. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 500 may further include the computer system 510 operating in a networked environment using logical connections to one or more remote computers, such as remote computing device 580. The network interface 570 may enable communication, for example, with other remote devices 580 or systems and/or the storage devices 541, 542 via the network 571. Remote computing device 580 may be a personal computer (laptop or desktop), a mobile device, a server, a router, a network PC, a peer device or other common network node, and typically includes many or all of the elements described above relative to computer system 510. When used in a networking environment, computer system 510 may include modem 572 for establishing communications over a network 571, such as the Internet. Modem 572 may be connected to system bus 521 via user network interface 570, or via another appropriate mechanism.

Network 571 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 510 and other computers (e.g., remote computing device 580). The network 571 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 571.

It should be appreciated that the program modules, applications, computer-executable instructions, code, or the like depicted in FIG. 5 as being stored in the system memory 530 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 510, the remote device 580, and/or hosted on other computing device(s) accessible via one or more of the network(s) 571, may be provided to support functionality provided by the program modules, applications, or computer-executable code depicted in FIG. 5 and/or additional or alternate functionality. Further, functionality may be modularized differently such that processing described as being supported collectively by the collection of program modules depicted in FIG. 5 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 5 may be implemented, at least partially, in hardware and/or firmware across any number of devices.

It should further be appreciated that the computer system 510 may include alternate and/or additional hardware, software, or firmware components beyond those described or depicted without departing from the scope of the disclosure. More particularly, it should be appreciated that software, firmware, or hardware components depicted as forming part of the computer system 510 are merely illustrative and that some components may not be present or additional components may be provided in various embodiments. While various illustrative program modules have been depicted and described as software modules stored in system memory 530, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method performed in an industrial automation system that includes a plant floor network configured to perform manufacturing operations, the plant floor comprising a security management proxy and a plurality of devices in communication with the security management proxy, the method comprising:
collecting, by the security management proxy, data associated with the plurality of devices;
determining security requirements associated with the plurality of devices;
making a comparison of the security requirements and the data;
based on the comparison, determining that one or more of the plurality of devices have at least one security vulnerability, such that the one or more of the plurality of devices define one or more vulnerable devices; and
dispatching, by the security management proxy, a respective security update to each of the one or more vulnerable devices,
wherein the security updates are applied to the one or more vulnerable devices so as to remove the at least one security vulnerability from the one or more vulnerable devices.

2. The method of claim 1, wherein each of the one or more devices define a respective cybersecurity run-time engine, method further comprising:
implementing, by the respective cybersecurity run-time engine, the security updates on the one or more vulnerable devices while the plant floor network is performing the manufacturing operations, such that operation of the industrial automation system is uninterrupted by the security updates.

3. The method of claim 2, wherein implementing the security updates comprises:
downloading, to respective cybersecurity runtime engine of each of the one or more vulnerable devices, a new security policy, a new security standard, or a new security patch.

4. The method of claim 3, wherein the new security policy defines an access control policy that is based on roles, the method further comprising:
receiving, by a first cybersecurity runtime engine of a first device of the one or more vulnerable devices, an access request from a second cybersecurity run-time engine of a second device of the plurality of devices;
based on the access request, the first cybersecurity runtime engine determining a role associated with the second device;
comparing the role to the access control policy to determine whether an access is permitted for the second device; and
the first cybersecurity run-time engine denying or granting the access request responsive to determining whether the access is permitted for the second device, so as to enforce the new security policy.

5. The method of claim 3, wherein the new security standard defines a new communication protocol, the method further comprising:
initiating, by a first cybersecurity runtime engine of a first device of the one or more vulnerable devices, a communication session with a second cybersecurity run-time engine of a second device of the plurality of devices;
during the communication session, the first cybersecurity runtime engine negotiating with the second cybersecurity run-time engine to select the new communication protocol; and
the first cybersecurity run-time engine sending data to the second cybersecurity run-time engine using the new communication protocol, so as to enforce the new security standard.

6. The method of claim 1, wherein collecting data associated with the plurality of devices comprises:
obtaining a current security policy from each of the plurality of devices.

7. The method of claim 1, wherein the industrial automation system further comprises an office network coupled to the plant floor network, the office network defining a security management server, the method further comprising:
the security management proxy obtaining at least a portion of the security requirements from the security management server.

8. The method of claim 7, the method further comprising:
the security management server subscribing to a security service so as to define a subscription;
based on the subscription, the security management server receiving a notification from the security service, the notification defining a vulnerability and a fix to the vulnerability.

9. The method of claim 8, the method further comprising:
the security management proxy receiving the notification from the security management server;
the security management proxy identifying a set of devices of the plurality of devices having the vulnerability; and
the security management proxy sending the fix to each of the devices in the set of devices having the vulnerability.

10. A security management proxy configured to operate within a plant floor network of an industrial automation system that comprises a plurality of devices configured to perform manufacturing operations, the security management proxy comprising:
a processor; and
a memory storing instructions that, when executed by the processor, cause the security management proxy to:
collect data associated with the plurality of devices;
determine security requirements associated with the plurality of devices;
make a comparison of the security requirements and the data;
based on the comparison, determine that one or more of the plurality of devices have at least one security vulnerability, such that the one or more of the plurality of devices define one or more vulnerable devices; and
dispatch a respective security update to each of the one or more vulnerable devices,
wherein the security updates are applied to the one or more vulnerable devices so as to remove the at least one security vulnerability from the one or more vulnerable devices.

11. The security management proxy of claim 10, wherein each of the one or more devices define a respective cybersecurity run-time engine, and the instructions further cause the security management proxy to:
download, to respective cybersecurity runtime engine of each of the one or more vulnerable devices, a new security policy, a new security standard, or a new security patch.

12. The security management proxy of claim 10, wherein the instructions further cause the security management proxy to:
obtain a current security policy from each of the plurality of devices.

13. The security management proxy of claim 10, wherein the industrial automation system further comprises an office network coupled to the plant floor network, the office network defining a security management server, and the instructions further cause the security management proxy to:
obtain at least a portion of the security requirements from the security management server.

14. The security management proxy of claim 10, wherein the instructions further cause the security management proxy to:
subscribe to a security service so as to define a subscription;
based on the subscription, receive a notification from the security service, the notification defining a vulnerability and a fix to the vulnerability.

15. The security management proxy of claim 14, wherein the instructions further cause the security management proxy to:
identify a set of devices of the plurality of devices having the vulnerability; and
send the fix to each of the devices in the set of devices having the vulnerability.

## Amended claims

### Amended claims in accordance with Rule 137(2) EPC.

1. A method performed in an industrial automation system (200, 300, 400) that includes a plant floor network (406) configured to perform manufacturing operations, the plant floor comprising a security management proxy (442) and a plurality of devices (104) in communication with the security management proxy (442), the method comprising:
collecting (602), by the security management proxy (442), data associated with the plurality of devices (104);
determining (604) security requirements associated with the plurality of devices (104);
making (606) a comparison of the security requirements and the data;
based on the comparison, determining (608) that one or more of the plurality of devices (104) have at least one security vulnerability, such that the one or more of the plurality of devices (104) define one or more vulnerable devices (104); and
dispatching (610), by the security management proxy (442), a respective security update to each of the one or more vulnerable devices (104),
wherein the security updates are applied to the one or more vulnerable devices (104) so as to remove the at least one security vulnerability from the one or more vulnerable devices (104).

2. The method of claim 1, wherein each of the one or more devices (104) define a respective cybersecurity run-time engine, method further comprising:
implementing, by the respective cybersecurity run-time engine, the security updates on the one or more vulnerable devices (104) while the plant floor network (406) is performing the manufacturing operations, such that operation of the industrial automation system (200, 300, 400) is uninterrupted by the security updates.

3. The method of claim 2, wherein implementing the security updates comprises:
downloading, to respective cybersecurity runtime engine of each of the one or more vulnerable devices (104), a new security policy, a new security standard, or a new security patch.

4. The method of claim 3, wherein the new security policy defines an access control policy that is based on roles, the method further comprising:
receiving, by a first cybersecurity runtime engine of a first device of the one or more vulnerable devices (104), an access request from a second cybersecurity run-time engine of a second device of the plurality of devices (104);
based on the access request, the first cybersecurity runtime engine determining a role associated with the second device;
comparing the role to the access control policy to determine whether an access is permitted for the second device; and
the first cybersecurity run-time engine denying or granting the access request responsive to determining whether the access is permitted for the second device, so as to enforce the new security policy.

5. The method of claim 3, wherein the new security standard defines a new communication protocol, the method further comprising:
initiating, by a first cybersecurity runtime engine of a first device of the one or more vulnerable devices (104), a communication session with a second cybersecurity run-time engine of a second device of the plurality of devices (104);
during the communication session, the first cybersecurity runtime engine negotiating with the second cybersecurity run-time engine to select the new communication protocol; and
the first cybersecurity run-time engine sending data to the second cybersecurity run-time engine using the new communication protocol, so as to enforce the new security standard.

6. The method of claim 1, wherein collecting data associated with the plurality of devices (104) comprises:
obtaining a current security policy from each of the plurality of devices (104).

7. The method of claim 1, wherein the industrial automation system (200, 300, 400) further comprises an office network coupled to the plant floor network (406), the office network defining a security management server, the method further comprising:
the security management proxy (442) obtaining at least a portion of the security requirements from the security management server.

8. The method of claim 7, the method further comprising:
the security management server subscribing to a security service so as to define a subscription;
based on the subscription, the security management server receiving a notification from the security service, the notification defining a vulnerability and a fix to the vulnerability.

9. The method of claim 8, the method further comprising:
the security management proxy (442) receiving the notification from the security management server;
the security management proxy (442) identifying a set of devices (104) of the plurality of devices (104) having the vulnerability; and
the security management proxy (442) sending the fix to each of the devices (104) in the set of devices (104) having the vulnerability.

10. A security management proxy (442) configured to operate within a plant floor network (406) of an industrial automation system (200, 300, 400) that comprises a plurality of devices (104) configured to perform manufacturing operations, the security management proxy (442) comprising:
a processor (520); and
a memory (530) storing instructions that, when executed by the processor (520), cause the security management proxy (442) to:
collect data associated with the plurality of devices (104);
determine security requirements associated with the plurality of devices (104);
make a comparison of the security requirements and the data;
based on the comparison, determine that one or more of the plurality of devices (104) have at least one security vulnerability, such that the one or more of the plurality of devices (104) define one or more vulnerable devices (104); and
dispatch a respective security update to each of the one or more vulnerable devices (104),
wherein the security updates are applied to the one or more vulnerable devices (104) so as to remove the at least one security vulnerability from the one or more vulnerable devices (104).

11. The security management proxy of claim 10, wherein each of the one or more devices (104) define a respective cybersecurity run-time engine, and the instructions further cause the security management proxy (442) to:
download, to respective cybersecurity runtime engine of each of the one or more vulnerable devices (104), a new security policy, a new security standard, or a new security patch.

12. The security management proxy of claim 10, wherein the instructions further cause the security management proxy (442) to:
obtain a current security policy from each of the plurality of devices (104).

13. The security management proxy of claim 10, wherein the industrial automation system (200, 300, 400) further comprises an office network coupled to the plant floor network (406), the office network defining a security management server, and the instructions further cause the security management proxy (442) to:
obtain at least a portion of the security requirements from the security management server.

14. The security management proxy of claim 10, wherein the instructions further cause the security management proxy (442) to:
subscribe to a security service so as to define a subscription;
based on the subscription, receive a notification from the security service, the notification defining a vulnerability and a fix to the vulnerability.

15. The security management proxy of claim 14, wherein the instructions further cause the security management proxy (442) to:
identify a set of devices (104) of the plurality of devices (104) having the vulnerability; and
send the fix to each of the devices (104) in the set of devices (104) having the vulnerability.
